# FASCICULE DE BREVET EUROPEEN

(11) **EP 2 979 378 B1**
(45) Date de publication et mention de la délivrance du brevet: **22.04.2020**
(21) Numéro de dépôt: 14715866.1
(22) Date de dépôt: 27.03.2014
(51) Int. Cl.: H04J 3/06, H04B 1/40, H04W 56/00, G06F 9/48

(54) **ARCHITECTURE D'INTERFACE ENTRE SOUS ENSEMBLES NUMERIQUE ET RADIO**
SCHNITTSTELLEN-ARCHITEKTUR ZWISCHEN EINER DIGITALEN UNTEREINHEIT UND EINER RADIO-UNTEREINHEIT
INTERFACE ARCHITECTURE BETWEEN DIGITAL SUB-UNIT AND RADIO SUB-UNIT

(30) Priorité: 27.03.2013 FR 1300710
(43) Date de publication de la demande: 03.02.2016
(73) Titulaire: THALES, 92400 Courbevoie (FR)
(72) Inventeur: SABIANI, Jean-Julien, F-92622 Gennevilliers Cedex (FR); VOILLEQUIN, Cyril, F-92622 Gennevilliers (FR)
(74) Mandataire: Dudouit, Isabelle
(86) Numéro de dépôt international: PCT/EP2014/056193
(87) Numéro de publication internationale: WO 2014/154821

(56) Documents cités:
- EP-A1- 2 107 684
- EP-A2- 0 911 993
- EP-A2- 2 154 788
- WO-A1-2008/142149
- WO-A1-2008/154232
- US-A1- 2007 281 743

## Description

L'objet de l'invention concerne une architecture d'interface pour des équipements de transmission numérique radiofréquence, c'est-à-dire un équipement utilisant un sous-ensemble numérique couplé à un sous-ensemble radiofréquence.

Elle trouve son application pour tout type de transmissions (modem, radar, navigation, etc.), toutes bandes de fréquences (VLF, haute fréquence HF, très haute fréquence VHF, ultra haute fréquence ou UHF, etc.). Elle est utilisée pour tous types d'équipements : portatifs, aéronautique, véhicules, etc. Elle est utilisée plus particulièrement pour des équipements radio logiciel plus connus sous l'expression anglo-saxonne « software defined radio » (SDR).

Les schémas d'interconnexions entre un module numérique bande de base et un module radio sont spécifiques à chaque industriel et/ou sont dédiés à une application donnée. La partie bande de base (BB) doit avoir une connaissance précise de la conception et du fonctionnement temps réel de l'équipement radio-fréquence (RF) auquel elle est associée. Les sous-ensembles bande de base et radiofréquence présentent une forte interdépendance l'un envers l'autre. De fait, ils ne sont pas ou peu réutilisables. De plus, les architectures ne sont pas modulaires.

Les architectures connues du demandeur sont basées sur l'utilisation de signaux analogiques sur fréquence intermédiaire FI ou non et/ou des signaux numériques spécifiques et/ou un ensemble de signaux discrets, portant tout ou partie des contraintes temps-réel et fonctionnelles liées à la conception du sous-ensemble radio (déclencheur ou trigger, délais ou timings spécifiques, fréquences caractéristiques, horloge, signaux de commandes, etc.). Les systèmes et architectures connus du Demandeur ne sont pas modulaires et ne permettent pas de les faire évoluer facilement. Du fait du couplage important existant entre les sous-ensembles BB et RF de l'art antérieur, les structures existantes n'offrent pas de possibilités d'interchangeabilité ou d'évolutions de l'un ou de l'autre des sous-ensembles sans avoir recours à une reprise des développements.

Les spécificités fonctionnelles et comportementales, les capacités, les performances, et notamment le séquencement temps-réel à respecter associés au sous-ensemble RF doivent être pris en compte de manière précise dans le domaine de la bande de base BB. Même dans les architectures antérieures les plus abouties, les mécanismes d'échange entre BB et RF sont synchrones, ce qui contraint la conception matérielle et logicielle de la BB; la maîtrise du temps réel doit être réalisée de manière fine dans la BB.

Le brevet EP 2 107 684 décrit une architecture d'interface selon laquelle les temps de traitement des différentes commandes du module radio doivent être connus de la bande de base et intégrés dans le fonctionnement de l'applicatif bande de base qui s'y exécute.

Pour palier cette caractéristique rendant dépendant les sous-ensembles Bande de Base / Applicatif bande de base / Radio Fréquence, le principe de la présente invention consiste notamment à fournir un meilleur niveau d'indépendance entre ces sous-ensembles, notamment en masquant à la bande de base et son applicatif le besoin de connaitre les évènements propres du module radio, le nombre de timings et leurs valeurs précises associées. Il suffit de se conformer à l'utilisation de commandes fonctionnelles en respectant un délai d'anticipation unique pour tout échange avec le module radio.

Un des objectifs de la présente invention est de définir une architecture reposant sur une décomposition de périmètres fonctionnels et techniques à respecter par les deux sous-ensembles bande de base BB et radiofréquence RF, un schéma d'interconnexion physique générique entre bande de base et radio fréquence qui ne fait pas appel à des signaux physiques spécifiques liés à la conception de l'un ou de l'autre des sous-ensembles BB et RF, et qui n'est pas associé à une solution d'implémentation physique particulière. L'architecture selon l'invention utilise un protocole d'échange de messages datés qui transitent sur une interface banalisée et donc générique répondant aux contraintes temps-réel des systèmes de transmission.

La propagation des messages est déterministe afin d'assurer, notamment, la synchronisation entre les deux domaines d'horloge BB et RF. A ce titre, le lien générique vérifie les caractéristiques suivantes :
- absence de signaux physiques dédiés ayant un lien direct avec la connaissance de la conception matérielle de l'un ou de l'autre des sous-ensembles BB ou RF (excepté le contrôleur d'interface),
- le lien n'intègre pas de signaux discrets physiques de commandes correspondant au contrôle d'un élément spécifique présent sur la BB ou la RF,
- les signaux ne se conforment pas à une fréquence, une tension particulière qui serait induite par la conception de l'un des deux sous-ensembles BB ou RF (excepté le contrôleur d'interface).

L'objet de l'invention concerne une architecture d'interface entre un premier sous-ensemble numérique bande de base, BB, et au moins un deuxième sous-ensemble radiofréquence, RF, connecté au moyen d'un lien L, l'architecture comportant au moins les éléments suivants :
- au niveau du sous-ensemble numérique BB,
   - un module applicatif de traitement de signal, TS, dont le fonctionnement est basé sur l'exploitation d'une heure H_{B}, ledit module applicatif, TS, est adapté à générer et/ou recevoir des messages MSG(H, données) comprenant une heure de réalisation H de réalisation, des données, les données comprenant des paramètres ou échantillons IQ, associés au fonctionnement du deuxième sous-ensemble RF et fonctionne avec un contrôleur d'interface générique, le sous-ensemble numérique BB dispose d'une vue fonctionnelle et temporelle simplifiée du sous-ensemble RF,
- au niveau du sous-ensemble RF comprenant une partie numérique et une partie analogique,
   - un contrôleur d'interface en liaison avec un module de traitement des messages MSG(H, données), ledit module de traitement des messages est adapté à fonctionner sur la base d'une heure H_{R}, et émettant des signaux de contrôles vers la partie numérique et la partie analogique du sous-ensemble RF, émettant et/ou recevant des messages vers/depuis le sous-ensemble BB,
   - une mémoire pour stocker les messages en attente de traitement, une table d'anticipation de messages, contenant les valeurs d'acquisition temporelles correspondant à chaque type de message et utilisées par le module traitement message pour réaliser le message, un module adapté à comparer l'heure H de réalisation d'un message à un temps nécessaire à son exécution et à fournir un signal de déclenchement du traitement du message au module de traitement de messages générant des signaux de contrôle vers ladite partie numérique et ladite partie analogique, et un module de mise à l'heure,
- lesdits contrôleurs d'interface sont adaptés à synchroniser l'heure H_{B} du sous-ensemble numérique BB et l'heure H_{R} du sous-ensemble RF,
- ledit lien L est adapté à véhiculer les messages datés entre un sous-ensemble RF et le sous-ensemble BB.

L'architecture comporte, par exemple, une chaine de restitution et une chaîne d'acquisition au niveau du sous-ensemble BB ou au niveau du sous-ensemble analogique RF.

Le contrôleur d'interface du sous-ensemble BB est, par exemple, adapté à générer des messages ayant le format suivant un champ adresse, suivie d'une heure de réalisation d'un message, du type de message, de la taille des données et un champ pour les données.

L'invention concerne aussi un procédé mis en œuvre dans l'architecture d'interface précitée comportant au moins les étapes suivantes :
- piloter un ou plusieurs sous-ensembles radiofréquence RF comprenant au moins un contrôleur d'interface, à partir d'un sous-ensemble bande de base BB comprenant un contrôleur d'interface et un module applicatif de traitement de signal TS,
- configurer le/les sous-ensemble(s) RF et déterminer le délai d'anticipation temporelle avec lequel le module applicatif TS doit fonctionner, ledit délai étant utilisé par le/les sous-ensemble(s) RF pour exécuter le message,
- synchroniser les heures H_{B}, H_{R}, entre le sous-ensemble BB et le/les sous-ensemble(s) RF,
- émettre à partir du sous-ensemble BB et vers un sous-ensemble RF, des messages datés MSG(H, données) comprenant une heure H de réalisation souhaitée par le plan antenne et des données, les paramètres ou échantillons indiquant au sous-ensemble RF les traitements à effectuer,
- mémoriser le message daté et intégrer le délai d'anticipation nécessaire au traitement de ce message afin que son exécution produise sur le plan antenne à l'heure H contenue dans le message daté, l'action correspondante à la commande également contenue dans le message daté.

Le procédé permet avantageusement de garantir l'abstraction matérielle et fonctionnelle du sous-module RF pour l'applicatif en bande de base, permettant de garantir l'indépendance de l'applicatif bande de base par rapport au module ou sous-module radio.

Selon une variante de réalisation, lors du démarrage, le procédé comporte au moins les étapes suivantes :
- une première phase pour déterminer le délai de traversée de l'interface entre un sous-ensemble RF et le sous-ensemble BB,
- une deuxième phase de synchronisation de l'heure H_{R} d'un sous-ensemble RF et de l'heure H_{B} du sous-ensemble BB,
- une troisième phase où le sous-ensemble BB récupère le délai d'anticipation minimal utilisé par l'applicatif TS pour transmettre les messages datés du sous-ensemble BB vers le sous-ensemble RF,
- une quatrième phase dans laquelle on déduit à partir de la latence entre le sous-ensemble BB et l'ensemble radio RF, le temps minimum d'anticipation unique qui sera à utiliser par le sous-ensemble BB pour piloter le sous-ensemble RF.

Le procédé peut comporter au moins les étapes suivantes :
- une première phase où l'on réalise une boucle d'émission/réception en exécutant les étapes suivantes,
- à l'instant t=H, le contrôleur d'interface BB envoie un message MSG(demande (τ)) au contrôleur d'interface RF afin de récupérer le temps nécessaire côté RF pour fabriquer un message de retour MSG(τ) qui contient le délai de transit D_{I} pour répondre, τ est le délai de fabrication du message,
- on mesure les instants de départ t et d'arrivée t' = H+2D_{I}+ τ de la boucle au niveau du sous-ensemble BB, afin de déterminer le délai de transit D_{I},
- une deuxième phase où le sous-ensemble BB transmet à l'instant H_{B} un message MSG(mise à l'heure [H_{B}+D_{I}] à destination du sous-ensemble RF contenant l'heure H_{B} majorée du délai de transit D_{I}, ou l'heure H_{R} majorée du délai de transit D_{I} durée nécessaire à l'acheminement du message jusqu'au module d'heure côté sous-ensemble radio,
- une troisième phase où ledit module applicatif TS envoie par un message MSG(Config RF) l'ensemble des configurations et/ou informations de configuration nécessaires à son fonctionnement, notamment la configuration numérique et la configuration analogique,
- en retour, le sous-ensemble radio renvoie le message MSG(D_{R}), la durée d'anticipation D_{R} nécessaire au traitement des messages ,
- le contrôleur d'interface côté BB réalise alors le cumul des durées d'anticipations D_{A}=D_{I}+D_{R}, et fournitcette valeur d'anticipation minimale D_{A} à l'applicatif TS pour dialoguer avec le sous-ensemble RF.

En émission, un message d'échantillons IQ créé par le sous-ensemble BB, comprend, par exemple, la date indiquant l'instant de sortie sur le plan antenne du premier échantillon, déduite de l'heure temps réel ***H_{B}*** du sous-ensemble BB. La génération chronologique des commandes datées par l'applicatif TS n'est pas nécessaire pour garantir leurs réalisations à la date imposée sur le plan antenne.

En réception, un message d'échantillons IQ créé par le sous-ensemble RF, peut comprendre la date indiquant l'instant de prise en compte du premier échantillon sur le plan antenne, et déduite de l'heure temps réel ***H_{R}*** du sous-ensemble radio. La génération chronologique des commandes datées n'est pas nécessaire pour garantir leurs réalisations à la date imposée sur le plan antenne.

Un message de configuration du sous-ensemble radio créé par le sous-ensemble BB comprend, par exemple, la date indiquant l'instant auquel le sous-ensemble radio doit être configuré pour les échantillons entrants / sortants, et la date est déduite de ***H_{B}*** du sous-ensemble BB. La génération chronologique des commandes datées n'est pas nécessaire pour garantir leurs réalisations à la date imposée sur le plan antenne.

Un message de contrôle ou monitoring créé le sous-ensemble RF, comprend, par exemple, la date indiquant l'instant de relevé des mesures, et la date est déduite de l'heure temps réel ***H_{R}*** du sous-ensemble radio.

Le procédé selon l'invention peut aussi être utilisé :
- à un système intégrant le sous-ensemble BB et le sous-ensemble RF au sein d'un même boitier,
- à un système où le sous-ensemble BB et le sous-ensemble RF sont logés dans deux boitiers physiquement séparés et distants.

Il peut aussi être appliqué dans une ou plusieurs des applications suivantes : système radar, système de transmission tactique, radio portable et radio véhicule, aéronautique et naval, système de goniométrie, système de capteurs / réflecteurs, système de brouillage, système de transmission d'infrastructure, équipement d'instrumentation, banc de tests, système de navigation, système de surveillance du spectre.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un schéma représentant l'architecture fonctionnelle selon l'invention,
- La figure 2, dans un diagramme temporel une comparaison entre les contraintes de synchronisation d'événements physiques entre BB et RF dans un système selon l'art antérieur et le mécanisme de substitution logique selon l'invention,
- La figure 3, une représentation de l'architecture selon l'invention,
- La figure 4, une représentation de la plage de fonctionnement de l'applicatif,
- La figure 5, une représentation pour une application MODEM,
- La figure 6, une illustration des traitements de la partie RF,
- La figure 7, un exemple de structure de message correspondant au principe de l'invention,
- La figure 8, le calcul du temps de traversée d'un message,
- La figure 9, la synchronisation des heures,
- La figure 10, une représentation fonctionnelle des traitements de l'interface selon l'invention,
- La figure 11, un exemple des traitements numériques de la partie RF,
- La figure 12, un exemple de diagramme de séquences entre BB et RF correspondant au procédé,
- La figure 13, un exemple de diagramme de séquences entre modules correspondant au démarrage du système selon le procédé,
- La figure 14, un diagramme de séquences correspondant à l'émission d'un paquet d'échantillons avec la configuration RF associée,
- La figure 15, un diagramme de séquences correspondant à la réception d'un paquet d'échantillons avec la configuration RF associée, et
- La figure 16, un diagramme de séquences correspondant au traitement des messages.

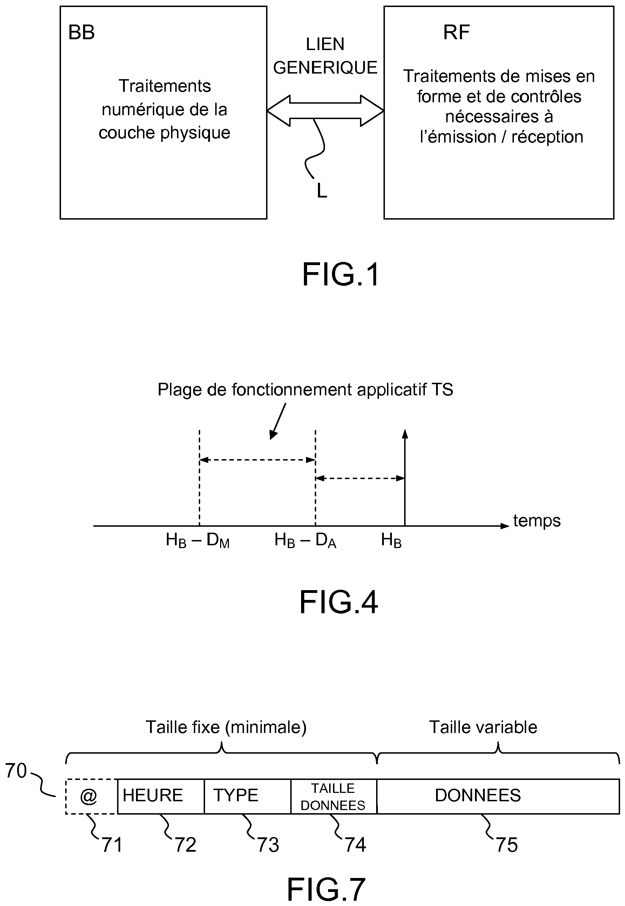

La figure 1 schématise le concept sur lequel repose l'architecture selon l'invention. Un premier sous-ensemble bande de base BB, 1, est interconnecté et dialogue avec un deuxième sous-ensemble, 2, radiofréquence RF par le biais d'un lien générique L qui repose sur l'utilisation de messages logiques datés. Le module BB dispose d'une vue fonctionnelle et temporelle simplifiée du module radio :
- le module RF est vu du sous-ensemble bande de base BB (ou module BB) et d'un applicatif bande de base BB comme présentant une latence (délai de traversée et de traitement depuis l'applicatif BB jusqu'au plan antenne) unique quelque soit la commande,
- le module RF est vu du module BB et de l'applicatif BB comme offrant des commandes évoluées ne nécessitant pas au niveau de la BB l'exécution d'une série de micro-commandes pour réaliser une fonction fondamentale du module RF (émission, réception, etc.). L'exécution de cette série de micro-commandes est prise en charge de manière autonome par le module RF lui-même.

Le sous-ensemble bande de base BB intègre des traitements numériques qui implémentent la couche physique d'un système numérique radio.

Le sous-ensemble radiofréquence RF est adapté pour réaliser l'ensemble des traitements numériques et analogiques de mise en forme et de contrôle temps-réel nécessaires à la bonne émission ou réception du signal radioélectrique.

Le lien générique L est adapté à réaliser l'interconnexion entre le module BB et le module RF sans faire intervenir de signaux physiques spécifiques liés à la conception de l'un ou de l'autre des sous-ensembles BB ou RF. Le système global peut être simplex, half-duplex, ou full-duplex, le lien étant duplex.

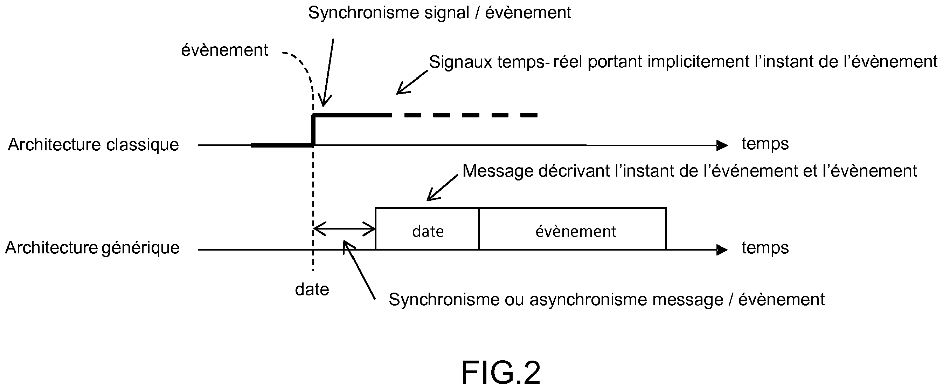

Sur la figure 2, dans un diagramme temporel, il est illustré dans la partie supérieure, le principe de déroulement des évènements pour une architecture selon l'art antérieur. A une date t donnée, il y a synchronisme entre un signal spécifique commandant l'exécution d'un évènement et les signaux temps-réels portant implicitement l'instant de l'événement.

Dans la partie inférieure de la figure 2, est illustré dans une même représentation temporelle, le principe d'échange de messages utilisé dans le cadre de l'invention. On remarque sur la figure qu'il peut y avoir soit synchronisme, soit asynchronisme du message avec l'événement lui-même. Pour cela, le message comporte notamment comme informations, la date de l'événement et la description de l'événement lui-même.

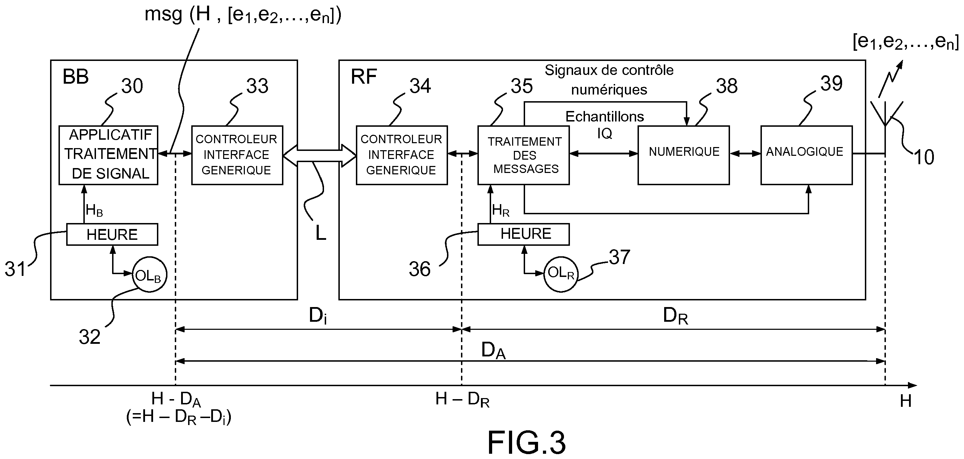

La figure 3 représente un exemple d'architecture selon l'invention et fait apparaître les délais caractéristiques à prendre en compte.

La partie bande de base (BB) comporte, par exemple, un module applicatif de traitement de signal 30, ou applicatif BB qui utilise une heure locale ou heure temps réel H_{B}, 31 pour cadencer son fonctionnement. L'heure locale est entretenue par un oscillateur local OL_{B}, 32. Le module applicatif TS implémente l'ensemble des traitements fonctionnels et spécifiques à la couche physique d'un système radio. Le module applicatif peut générer les messages destinés au sous-système radio de manière chronologique ou non. L'applicatif correspond, par exemple, à l'applicatif pouvant être déployé au sens SCA ou SDR, ou à l'applicatif chargeable ou rechargeable dans les architectures classiques. L'applicatif manipule un ou plusieurs signaux à fréquence d'échantillonnage minimale dans un format complexe I/Q bande de base. Le signal porté peut cependant aussi être réel (spectre non centré sur la fréquence nulle).

L'applicatif TS de la BB en fonctionnement normal n'a pas à connaitre les temps de traversées exactes de la RF, mais seulement le temps minimum et unique d'anticipation pour envoyer une commande à la RF; c'est le module RF lui-même qui se charge d'exécuter au bon moment la ou les commandes nécessaires pour que l'action de la commande puisse être réalisée au bon moment sur le plan antenne. Le module RF réalise donc l'ajustement nécessaire du moment de déclenchement de la commande ou de l'événement, en fonction de la nature de la commande ou évènement et de la réalisation physique du module RF.

En émission, le signal et les commandes issus de l'applicatif de traitement de signal sont transmis à un contrôleur interface générique 33, via une encapsulation dans des messages formatés. Les signaux sont des messages datés MSG(H, [ei]) où les ei correspondent à la suite d'échantillons à émettre. Les commandes sont également des messages datés. Des exemples seront donnés dans la suite de la description. La réciproque est identique en réception.

La partie RF comprend un contrôleur d'interface générique 34 en liaison avec un module 35 de traitement des messages. Le module de traitement des messages utilise une heure locale ou heure temps réel H_{R}, 36 alimentée par un oscillateur local 37, OL_{R}. En émission, le module de traitement des messages 35 réalise la transformation des messages en signaux de contrôles numériques à la partie numérique 38 de la partie RF et des signaux de contrôles analogiques à la partie analogique 39 de la partie RF, et réalise l'extraction des échantillons IQ. Une antenne d'émission 10 émet les signaux associés à l'application radio. La réciproque est identique en réception.

Le contrôleur d'interface générique 33 de la partie BB et le contrôleur d'interface générique 34 de la partie RF réalisent le protocole d'échange et le support au contrôle du lien physique. Le protocole a notamment pour fonction de maitriser les temps d'acheminement et la synchronisation temporelle entre les deux domaines d'horloge BB et RF (H_{B}, H_{R}). Suivant les capacités du protocole physique utilisé, le lien générique est par exemple constitué uniquement de signaux de données ou il peut être complété de deux signaux discrets spécifiques (non obligatoire, dépend de la conception) :
- un signal pour la synchronisation temporelle H_{R}/H_{B},
- un signal pour propager et partager le même oscillateur local OL entre BB et RF, ce signal d'oscillateur local peut aussi être directement délivré à la BB et la RF si l'architecture le nécessite.

Pour permettre la mise en œuvre de l'architecture selon l'invention, le module applicatif de traitement de signal doit fonctionner en anticipation par rapport à l'heure temps-réel et doit utiliser un système de messagerie datée pour échanger avec la radio RF.

Afin d'assurer la maîtrise des temps et garantir le bon fonctionnement temps-réel, les deux sous-ensembles BB et RF formant l'architecture selon l'invention implémentent une fonction heure. Les deux sous-ensembles utilisent le même format pour l'heure. Selon un mode de mise en œuvre, le module bande de base va agir comme le maître de l'heure vis-à-vis du module radio RF qui est esclave. Sans sortir du cadre de l'invention, il est aussi possible d'imaginer une application dans laquelle, le module radio est maître de l'heure et le module applicatif est esclave.

L'applicatif TS fonctionne avec une valeur d'anticipation temporelle minimale *D_{A}* à respecter par rapport à l'heure temps-réel *H_{B}*.

Une première partie *D_{R}* de la valeur *D_{A}* est obtenue auprès de la RF elle-même, par exemple avant le démarrage de l'applicatif. Cette valeur *D_{R}* est unique pour chaque RF, ou pour chaque configuration que la RF est en mesure de gérer. Une radio multi bandes (VHF/UHF), par exemple, peut présenter des constantes de temps différentes en configuration VHF ou UHF. *D_{R}* correspond à la latence maximale de la capacité radiofréquence RF la plus longue en durée à exécuter.

La seconde partie de la valeur d'anticipation *D_{I}* est obtenue soit par conception de l'interface matérielle entre la BB et la RF (constante), soit par une mesure explicite du temps de transit entre le contrôleur de l'interface générique de la BB et le contrôleur de l'interface du module radiofréquence, réalisée en phase de démarrage du système. Cette valeur *D_{I}* de temps de transit est unique pour un schéma d'interconnexion physique donné.

Les valeurs *D_{R}, D_{A}, D_{I}* sont des valeurs déterministes. Le délai d'anticipation minimale *D_{A}* avec lequel l'applicatif va fonctionner est obtenue par la somme de *D_{I}* + *D_{R}.* Afin d'éviter un accroissement significatif des ressources matérielles de la radio fréquence RF, l'applicatif TS doit respecter également une durée d'anticipation maximale *D_{M}.*

Dans ces conditions, l'applicatif TS peut fonctionner dans une fenêtre temporelle de fonctionnement définie par [*D_{A}, D_{M}*] par rapport à l'heure temps réel H_{B}, lui permettant de dé-contraindre sa dépendance à la RF, et de pouvoir notamment fonctionner avec une gigue temporelle. La plage de fonctionnement applicatif de TS est représentée sur la figure 4 sur un axe temporel.

Les sous-ensembles BB et RF communiquent par le biais d'échanges de messages datés portant plusieurs natures d'informations, par exemple :
- des commandes pour le contrôle des capacités du sous-ensemble RF, par exemple, pour la synchronisation des heures H_{R} et H_{B}, l'émission, la réception, la fréquence porteuse (f₀), la puissance de sortie (P_{TX}), etc.
- des échantillons I/Q : signal bande de base échantillonné à émettre ou reçus,
- des données : utilisées à des fins de configuration de l'un ou de l'autre des sous-ensembles, ou à des fins de contrôle ou monitoring (température, heure locale, OL verrouillé, activités, etc.).

L'envoi des messages datés par l'applicatif de la BB à la RF va respecter la valeur d'anticipation minimale *D_{A}.* Les messages reçus par la BB de la RF arrivent avec un retard *D_{A}'* dont la valeur correspond à l'implémentation du système. Cette valeur de retard est du même ordre de grandeur que la valeur minimale *D_{A}* mais elle peut être différente car les traitements sur le chemin de données peuvent être différents. Par souci de symétrie entre l'émission et la réception, il est envisageable de faire correspondre par conception les valeurs de *D_{A}* et *D_{A'},* par exemple, en réalisant *D_{A}* égal à Max(*D_{A}* et *D_{A'}*)*.*

En émission, un paquet d'échantillons est à envoyer avant l'heure courante (*H-D_{A}*) dans un message dont la date de réalisation est *H*, c'est-à-dire que le premier échantillon du paquet doit être présent en sortie d'antenne du module radio RF exactement à l'heure H.

En réception, un paquet d'échantillons est reçu au moins après l'heure de réalisation H, dans un message dont la date de réalisation est H, c'est-à-dire que le premier échantillon du paquet a été acquis sur l'antenne de réception du module radio RF exactement à l'heure H. L'expression « heure de réalisation d'un message» définit la date ou heure à laquelle le module ou sous-ensemble RF aura du effectuer une action décrite dans les paramètres du message. L'heure de réalisation d'une commande au niveau du plan l'antenne correspond à l'instant de présentation des données sur le plan antenne.

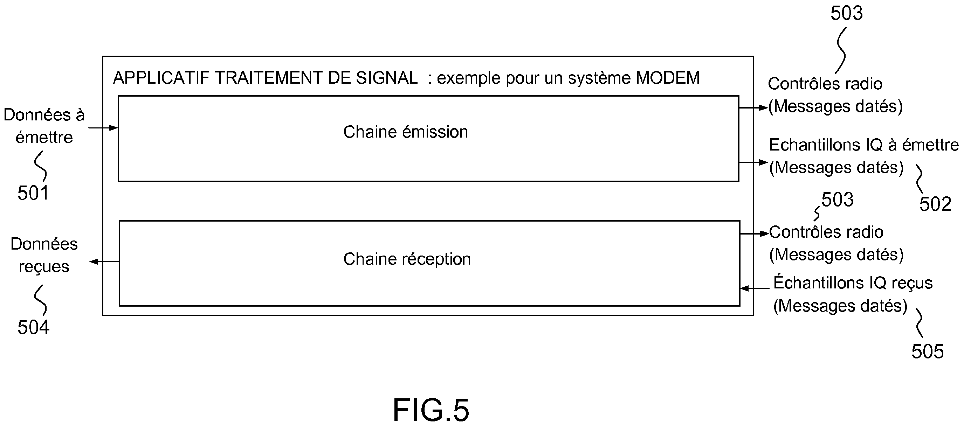

Dans le cas d'une application de traitement de signal de type MODEM, la figure 5 illustre le principe de fonctionnement de l'applicatif TS.

En émission, les données à émettre 501 sont transmises à une chaîne de traitement comprenant, par exemple, un module de codage canal, suivi d'un module de modulation, les signaux codés et modulés sont envoyés à un module adapté à insérer des séquences de référence, puis les signaux sont transmis à un module de mise en forme spectrale. Le contrôle des éléments de la radio associés au signal est également généré, contenant la fréquence d'échantillonnage, l'instant d'émission, la puissance de sortie, la quantification des échantillons, etc. La mise en forme spectrale peut être suivie d'une chaîne de restitution optionnelle. En sortie de la chaine d'émission, il n'existe que des messages sortants vers la RF. Les messages de contrôle radio 502 issus de la chaîne d'émission sont datés et comportent les paramètres qui caractérisent les contrôles radio ou les événements. Les échantillons I/Q, 503, à émettre sont aussi sous la forme de messages datés.

En réception, l'applicatif TS génère des messages pour commander des acquisitions de signal radio et obtenir des échantillons IQ. Ces messages sont de type sortant uniquement, 505. Les échantillons I/Q de signal sont reçus par l'applicatif TS dans des messages datés de type entrant, 503. Ils sont transmis à une chaîne de traitement en réception comprenant, par exemple, une chaîne d'acquisition, puis un filtre adapté, et à un module de synchronisation, puis à un égaliseur, les échantillons sont ensuite démodulés puis décodés. Une sortie de la chaîne de traitement en réception comprend les données reçues 504. Une autre sortie correspond aux contrôles radio 505 qui se présentent sous la forme de messages datés.

L'applicatif traitement de signal TS n'a pas à connaître les éléments de conception du module RF. Les messages générés par l'applicatif pour contrôler le fonctionnement radio comportent notamment les paramètres suivants : la fréquence d'échantillonnage, la fréquence de réception, l'instant de réception, le gain, etc.

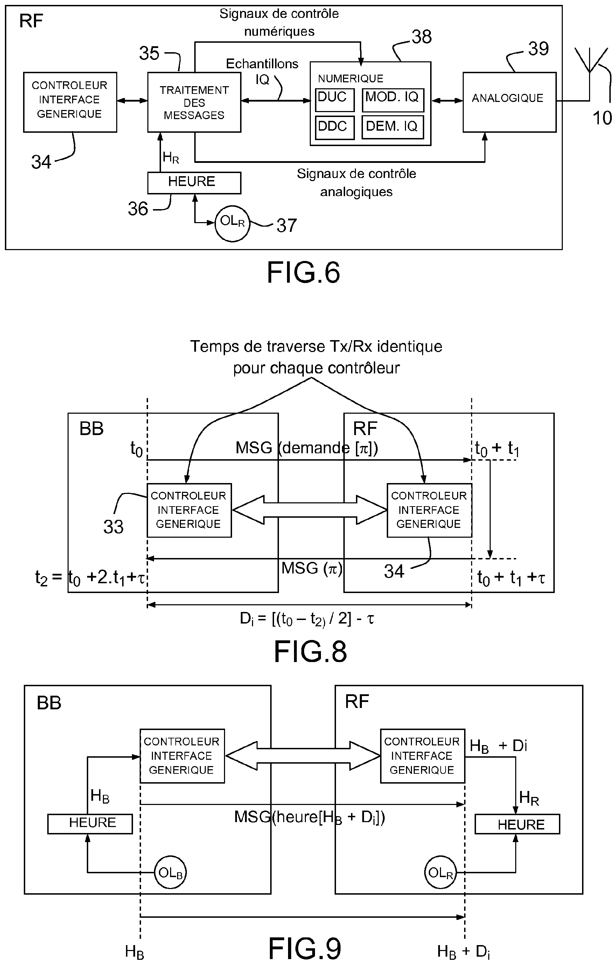

Par exemple dans le cas exposé à la figure 5, la partie RF comprend comme dans la figure 6, un contrôleur d'interface générique 34, d'un module de traitement des messages 35 provenant du contrôleur d'interface générique 34, qui reçoit une heure H_{R} venant d'un module HEURE 36 en liaison avec un oscillateur local 37. Le résultat des messages traités en sortie du module de traitement des messages sont des signaux de contrôle qui ont pour objectif de commander la partie numérique 38 de la RF, des signaux de contrôle qui vont piloter la partie analogique 39 de la partie RF et des échantillons IQ. En émission, la partie analogique reçoit les signaux issus des traitements de la partie numérique et a pour objectif de réaliser les fonctions permettant d'émettre les signaux vers l'antenne d'émission-réception 10 (et réciproquement pour la réception).

Dans le cas de la figure 6, la partie numérique de la radio intègre des capacités de changement de fréquence d'échantillonnage montée ou descente en fréquence ou DUC acronyme anglo-saxon de Digital Up Converter /DDC 50 acronyme anglo-saxon de Digital Down Converter adaptées à réaliser l'interface avec les convertisseurs analogique numérique ou CAN et les convertisseurs numériques analogiques ou CNA. Cette fonction n'est pas, dans le cadre de l'invention, préconisé pour être traitée par le dispositif BB. Le principe est que la RF va réaliser l'adaptation à son niveau pour éviter les dépendances de l'applicatif à la conception de la chaîne de conversion qui est dans la RF et qui lui est donc spécifique.

La structure des messages est importante pour identifier sans ambigüité la nature de l'information contenue dans les messages. L'architecture va donc utiliser un système de typage des messages de préférence systématique, unique et réalisé message par message. Chaque message va porter une valeur de type unique. Sans sortir du cadre de l'invention, on pourra aussi créer des messages portant plusieurs types, avec en conséquence un allongement de durée des messages et un allongement de la latence des échanges.

La figure 7 représente un exemple de structure utilisée pour les messages 70. Le message est constitué, par exemple, d'une première partie fixe et d'une deuxième partie de taille variable.

La première partie comprend une adresse, 71, suivie de l'heure de réalisation 72 d'un message, du type 73 de message, et de la taille des données 74. La deuxième partie de taille variable comprend un champ 75 de taille variable pour les données. La génération chronologique des commandes datées 502, 503 par l'applicatif 30 n'est pas nécessaire pour garantir leurs réalisations à la date imposée ou heure de réalisation 72 sur le plan antenne 10.

L'heure de réalisation peut être déduite de la valeur H_{B} si le message est envoyé depuis la BB, ou de la valeur H_{R} si le message est envoyé de la structure RF.

Le type de message peut être : un paquet d'échantillons I/Q unique, des paquets d'échantillons IQ multiples (indication : démarrage, en cours, stop), une configuration RF (synchro/entretien heure, capacités RF, etc.).

La taille des données correspond au nombre de données contenu dans la deuxième partie de données.

Dans le cadre d'une émission ou réception « longue » d'échantillons I/Q (émission/réception continue à durée infinie ou inconnue, ou de durée très significativement importante par rapport à la durée des échantillons), le paquet d'échantillons échangé entre la partie BB et la partie radio sera segmenté en plusieurs (n) messages mᵢ, pour optimiser le débit requis, seul le premier message m₁, contient une date ou heure qui sera exploitée par la RF. Les autres messages m₂,...mₙ contiennent une information de continuité ou de fin de séquence. Le type du message permet de réaliser la segmentation par exemple. Les messages permettent de porter plusieurs valeurs de quantification des échantillons IQ. Par exemple, on préconise de retenir les quantifications suivantes, Q=1, 8, 12, 16 et 24. La quantification variable des échantillons IQ permet notamment de limiter le débit sur le lien générique transmettant les messages. Ceci permet de traiter une bande de fréquence plus large lorsqu'une grande dynamique n'est pas requise, ce qui est le cas lorsque le contrôle automatique de gain CAG est réalisé côté RF.

Les dates contenues dans les messages correspondent aux instants de réalisation du contenu du message associé :
- en émission, dans un message d'échantillons IQ créé par la BB, la date indique l'instant de sortie sur le plan antenne du premier échantillon, elle est déduite de l'heure ***H_{B}**,*
- en réception, dans un message d'échantillons IQ créé par la RF, la date indique l'instant de prise en compte du premier échantillon sur le plan antenne, elle est déduite de l'heure ***H_{R}**,*
- dans un message de configuration RF créé par la BB, la date indique l'instant auquel la RF doit être configurée pour les échantillons entrants / sortants, elle est déduite de ***H_{B}**,*
- dans un message de contrôle ou monitoring créé par la RF, la date indique l'instant de relevé des mesures, elle est déduite de ***H_{R}**.*

Lorsque l'on doit adresser plusieurs sous-ensembles RF avec une même BB, ou plusieurs BB à une ou plusieurs RF, il est possible d'utiliser la notion d'adresse en-tête.

Lorsqu'une RF intègre nativement plusieurs voies d'émission et de réception, on utilisera une notion de canal couplé au type des messages.

Le système d'adressage et de canal permet toute la flexibilité nécessaire pour pouvoir traiter les systèmes SIMO / MIMO implémentés à l'aide d'un module RF unique ou multiple.

La figure 8 schématise la boucle réalisée à partir de la BB permettant de calculer le délai de transit entre les deux contrôleurs interface générique. Pour garantir le fonctionnement temps réel global, ce délai doit être pris en compte. Le délai de transit D_{I} doit être déterministe et reproductible. Par exemple, la valeur de ce délai peut-être mesurée au démarrage du système via la réalisation d'une boucle d'émission/réception à partir du module BB. La boucle est réalisée à partir de la BB et consiste à envoyer un message de demande de temps de génération de réponse de boucle τ à la RF. Ce temps τ correspond au délai nécessaire que la RF renvoie sa réponse à la BB.

t₀ correspond à l'instant de transmission d'un message de la BB vers la RF, (t₀+t₁) à l'instant de réception de ce message MSG par la RF, (t₀+t₁+τ) à l'instant auquel la RF génère le message réponse, τ : le délai pour générer un message et t₂=t₀+2.t₁+τ à l'instant auquel la BB reçoit le message de la RF. Le délai de transit D_{I} est égal à [(t₀-t₂)/2]-τ.

Le contrôleur d'interface générique 33 (BB), ou 34 (RF) doit permettre de synchroniser les heures H_{B} et H_{R}. Pour cela, il utilise un message spécifique MSG(heure[H_{B}+D_{I}] envoyé de la BB, maître de l'heure du système, vers la RF qui joue un rôle d'esclave. Ce message est envoyé par la BB à un instant précis de manière à ce que ce message arrive exactement à l'instant de mise à l'heure correspondant au message d'heure qu'il porte. L'heure H_{R} de la RF est maintenue identique à H_{B}, grâce à un entretien périodique réalisé par le contrôleur d'interface 34. La procédure d'entretien est, par exemple, réalisée par l'échange de messages périodiques dédiés entre la BB et la RF. La fréquence de resynchronisation BB et RF dépend de la différence de précision des oscillateurs locaux OL, s'ils sont différents. BB et RF partagent une même valeur d'heure (H_{B}=H_{R}).

Le lien générique L correspond à l'interface physique (matérielle) entre les sous-ensembles BB et RF. Le lien générique vérifie les caractéristiques suivantes :
- l'absence de signaux physiques ayant un lien direct avec la connaissance de la conception matérielle de l'un ou de l'autre des sous-ensembles BB ou RF,
- le lien n'intègre pas de signaux discrets de commandes correspondant au contrôle d'un élément spécifique présent sur la RF,
- les signaux ne se conforment pas à une fréquence, une tension particulière qui serait induite par la conception du sous-ensemble RF,
- la propagation des messages est déterministe afin d'assurer, notamment, la synchronisation entre les deux domaines d'heure BB et RF,
- le débit qu'il supporte est conforme aux besoins des applicatifs du système.

Le lien générique physique est adapté pour véhiculer les messages datés. Le lien est choisi en fonction, notamment, des contraintes de consommation, de la distance séparant la BB et la RF et des débits nécessaires à l'applicatif TS. Par exemple, pour couvrir une gamme de fréquence d'échantillonnage complexe jusqu'à 20MHz, avec une quantification de 16 bits, en fonction du surplus de débit requis par les entêtes de messages, un débit de 640 Mbps est requis. Cependant, un grand nombre d'applications ne nécessitent pas plus de 8 bits de quantification, surtout lorsque la partie numérique de la RF prend en charge la fonction DUC/DDC et la commande automatique de gain ou CAG. Par exemple, il est possible d'utiliser la technologie Gigabit Ethernet pour la partie physique du lien générique.

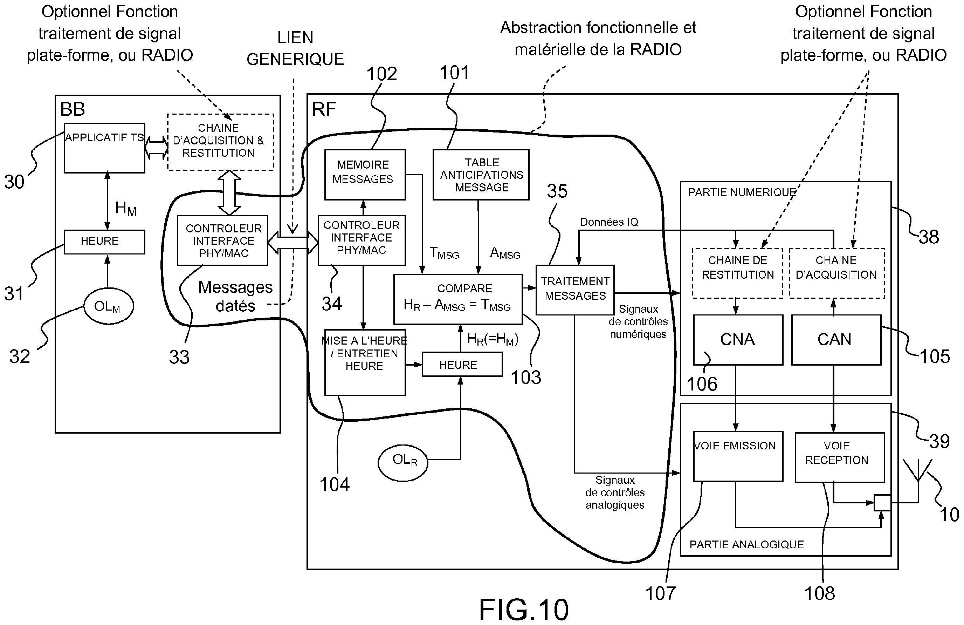

La figure 10 est un synoptique fonctionnel des éléments mis en œuvre par l'interface selon l'invention. On retrouve comme dans la figure 2, au niveau de la partie BB un oscillateur local, une horloge, un applicatif TS et un contrôleur d'interface. Selon une variante de réalisation, il est possible d'ajouter une chaîne d'acquisition et de restitution (DUC/DDC) connues de l'Homme du métier.

La partie RF comporte, par exemple, un contrôleur d'interface générique 34, un module de traitement des messages, 35, une table 101 d'anticipations message, une mémoire 102 pour les messages, un module 103 comparateur qui reçoit les différentes heures, un module 104 de mise à l'heure, une horloge, un oscillateur local, une partie numérique comprenant un convertisseur analogique/numérique 105, un convertisseur numérique/analogique 106, une partie analogique comprenant une voie d'émission 107 et une voie de réception 108 en liaison avec l'antenne 10. Il n'y a pas de contrainte technologique à respecter pour le type de mémoire à utiliser. Le procédé n'impose pas au sous-ensemble RF de réaliser le tri du contenu de la mémoire 102 contenant les messages.

Le module de traitement des messages est adapté pour exécuter les messages reçus du BB et pour générer des messages à construire et à émettre vers le BB. Ce module a notamment pour fonction le contrôle de l'ensemble de la partie RF et il est garant du respect temps-réel. Ce module interprète les messages reçus du BB, notamment les heures d'application des messages. Il utilise l'heure locale H_{R} afin de réaliser l'anticipation de l'exécution du message. Il réalise la génération de l'ensemble des signaux de commandes internes au module RF visant à paramétrer les traitements numériques et analogiques. Ce module embarque l'ensemble des fonctions de séquencement temps réel. Il génère l'ensemble des signaux discrets utilisés pour les paramétrages et les contrôles nécessaires.

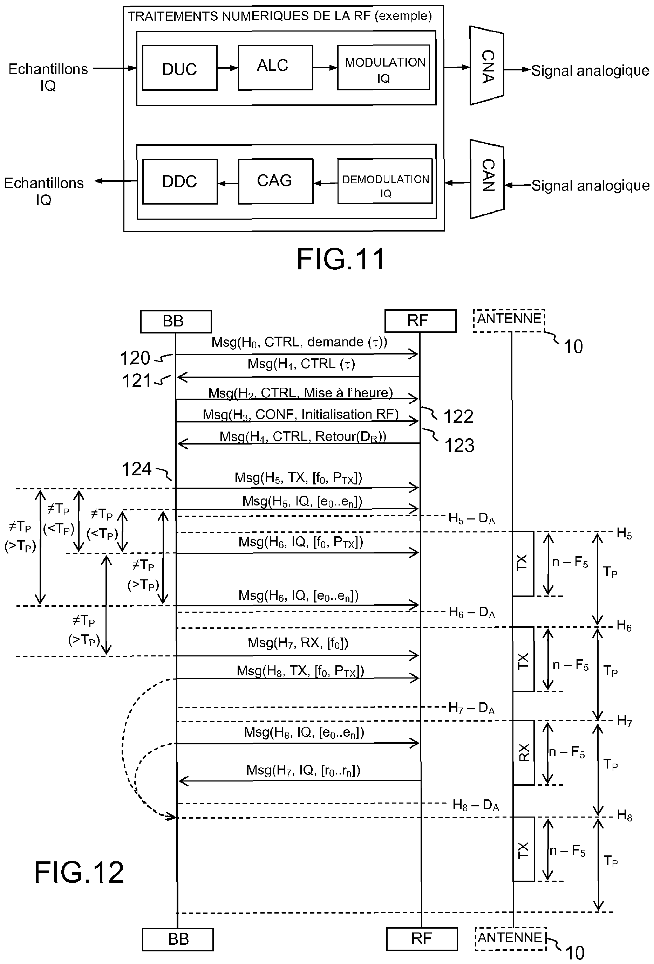

La partie numérique de la RF comprend notamment un ensemble de modules adaptés pour les traitements numériques de la RF détaillé à la figure 11. Ces modules ont notamment pour fonction de supporter des traitements spécifiques de la conception de la radio et de permettre la bonne exécution des messages. Les traitements exécutés au niveau de la partie numérique de la RF sont pilotés par le module de séquenceur de traitement des messages.

Les échantillons I/Q du message en sortie du séquenceur traitement messages sont transmis, par exemple, à un module DUC afin de gérer la montée à la fréquence d'échantillonnage du CNA, puis les échantillons passent dans un module de gestion de la puissance d'émission (contrôle automatique de niveau ou ALC : Automatic Level Control), avant d'être modulés et convertis au sein du CNA.

Le signal analogique reçu sur l'antenne de réception est converti en échantillons numériques qui sont démodulés pour obtenir les échantillons I/Q. Les échantillons I/Q sont ensuite transmis à un module de gestion de la puissance d'émission CAG, l'étape suivante consistant à contrôler la descente à la fréquence d'échantillonnage dans le module DDC.

La partie RF comprend l'ensemble des traitements analogiques connus de l'Homme du métier entre l'entrée/sortie des CAN/CNA et l'antenne d'émission/réception. Ces traitements sont pilotés par le module de séquenceur traitement des messages qui transmet vers la partie analogique de la RF des signaux de contrôle analogiques. Comme traitements analogiques qui ne seront pas détaillés dans la description, il est possible de citer, le filtrage, l'amplificateur de puissance ou PA (acronyme anglo-saxon de Power Amplifier), les commutateurs, la transposition, l'amplificateur faible bruit ou LNA (acronyme anglo-saxon de Low Noise Amplifier), etc.

Les étapes de traitement des messages issus de la partie BB et traités dans la partie RF sont, par exemple, les suivantes :
- un message MSG envoyé de la BB à la RF est acheminé avec une latence Di connue vers le contrôleur d'interface 34 RF,
- ce message est stocké dans la mémoire messages 102 et mis en attente de son traitement. La taille de la mémoire message correspond au nombre de messages que l'on veut pouvoir envoyer à l'avance côté BB. Par exemple, il est possible de dimensionner la mémoire messages afin qu'elle contienne de 4 à 5 messages pour un système de transmission half-duplex et le double pour un système full-duplex,
- la table d'anticipation 101 des messages contient les valeurs d'anticipation temporelles correspondant à chaque type de message (par exemple message de configuration, message échantillons I/Q, ..) qui sont utilisées par le module de traitement message pour réaliser le message, c'est-à-dire l'exécuter,
- le comparateur 103 vérifie l'heure de réalisation souhaitée de chaque message stocké en mémoire H_{MSG}(1...N) avec le temps A_{MSG} nécessaire à son/leur traitement en fonction de l'heure courante H_{R}, de manière à déclencher le traitement du message au moment qui garantit l'heure de réalisation. Lorsque la condition H_{R}-A_{MSG}=H_{MSG} est remplie, alors le module de traitement va lancer l'exécution du message. L'exécution du message consiste notamment à mettre en œuvre l'ensemble des séquencements de contrôles et configuration, et des chemins de données permettant la réalisation du message. Ces traitements sont destinés à piloter à la fois la partie numérique et la partie analogique du sous-ensemble RF.

La figure 12 représente un exemple de déroulement des étapes exécutées par le procédé selon l'invention.

Au démarrage, la BB, qui est dans cet exemple, le maître du système réalise les initialisations nécessaires à la maîtrise du temps auprès de la RF. Lors de cette première phase d'initialisation, la BB demande, 120, à la RF la valeur du délai τ nécessaire à la BB pour calculer le retard D_{I} de l'interface entre BB et RF. La RF lui fournit, 121, cette valeur.

La BB réalise ensuite la configuration de la RF, 122, selon le mode de fonctionnement souhaité et obtient en retour, 123, la valeur D_{R} permettant à la BB de calculer le délai d'anticipation D_{A} avec lequel l'application TS doit fonctionner.

Lorsque la RF est configurée et que la BB dispose du délai d'anticipation D_{A}, alors l'application TS démarre son activité. Cette activité consiste, à échanger des messages datés MSG(H_{I}) indiquant à la RF les traitements à réaliser.

Dans l'exemple de la figure 12, une forme d'onde à N_{S} sauts par seconde est considérée, correspondant à la durée T_{P} entre chaque début émissions.

Le premier message transmis, par le message portant l'heure H₅ indique la fréquence f₀ et la puissance d'émission P_{TX} à utiliser à l'heure H₅. Ce message permet de commander les configurations de la RF pour l'heure H₅.

Le deuxième message portant l'heure H₅ contient les échantillons IQ à émettre à l'heure H₅. Ces échantillons sont cohérents de la configuration envoyée lors du message précèdent pour l'heure H₅. L'ordre et le séquencement de ces messages n'a pas d'importance excepté la contrainte d'anticipation décrite ci-dessous.

Les messages envoyés par la BB à la partie RF sont tous émis avec une anticipation de valeur D_{A}, et ne sont pas nécessairement synchrones des instants paliers de l'antenne. Les messages ne sont pas strictement espacés de T_{P}, et ils peuvent être envoyés soit lors du palier précédent, soit même deux paliers à l'avance, par exemple, la commande du palier Tx sur H₈ est envoyée deux paliers à l'avance. En émission, les messages sont asynchrones du fonctionnement de la RF.

La RF réalise le contrôle du temps-réel. Sur le plan antenne, chaque palier est bien émis aux instants souhaités (H₅, H₆, H₇, H₈) et les signaux émis ou reçus ont une durée de n.F_{S}, ou n est le nombre échantillons et F_{S} la fréquence d'échantillonnage, durée qui correspond à la durée réelle des échantillons.

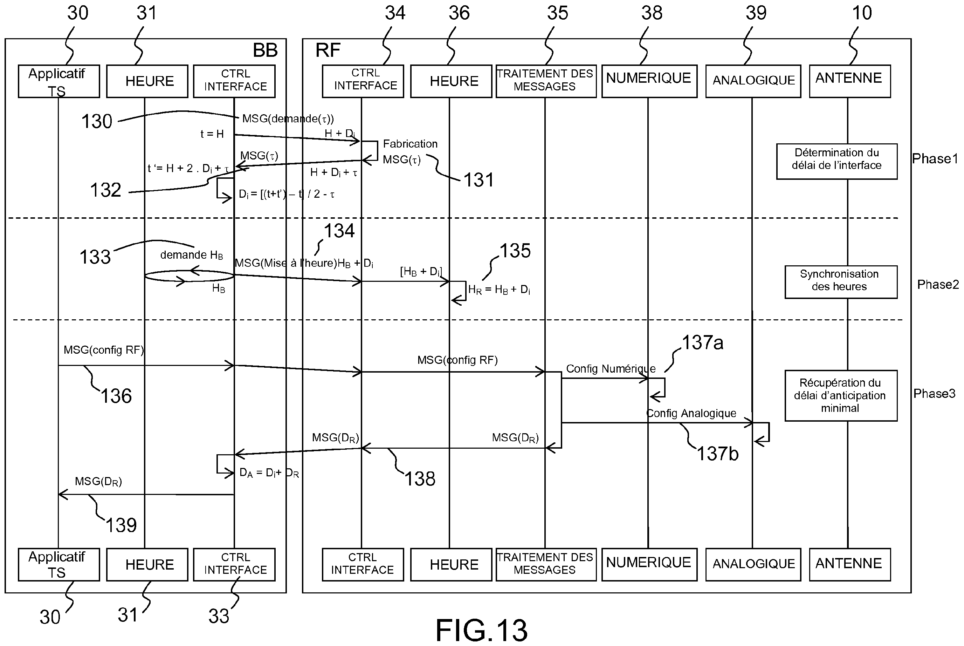

La figure 13 schématise un exemple de déroulement des étapes impliquées lors du démarrage du système. Le démarrage du système comporte, par exemple, trois phases.

Lors de la première phase, on détermine le délai de traversée de l'interface entre BB et RF, puis lors de la deuxième phase, on synchronise les heures de la BB et de la RF, puis lors de la troisième phase, la BB configure la RF et récupère le délai d'anticipation minimal RF.

Pour cela, en première phase, le procédé va réaliser une boucle d'émission/réception entre le contrôleur d'interface BB et le contrôleur d'interface RF. A l'instant t=H, 130, le contrôleur d'interface BB envoie un message MSG(demande (τ)) au contrôleur d'interface RF afin de récupérer le temps nécessaire côté RF pour fabriquer, 131, le message de retour MSG(τ) qui contient le délai τ. Les instants de départ t=H et d'arrivée t' = H+2D_{I}+ τ de la boucle sont mesurés du côté BB, ces valeurs associées à l'information de durée de traitement de réponse côté RF permettent de calculer le délai de l'interface D_{I}. Les durées de fabrication et de réception de message côté BB ne sont pas nécessairement indispensables car si elles sont égales, leurs contributions s'annulent. Dans le cas où elles sont différentes, leurs contributions individuelles sont connues et elles peuvent être prises en compte.

En phase 2, le BB transmet à l'instant H_{B}, 133, un message MSG(mise à l'heure [H_{B}+D_{I}]) à destination de la RF contenant l'heure H_{B} majorée du délai d'interface D_{I}, durée nécessaire à l'acheminement du message jusqu'au module d'heure côté RF. A réception du message côté RF, il suffit de remettre le compteur d'heure à la valeur reçue.

En phase 3, l'applicatif TS envoie, 136, par un message MSG(Config RF) l'ensemble des configurations et/ou informations de configuration nécessaires à son fonctionnement, décliné par la RF en configuration numérique 137a et en configuration analogique 137b. En retour, la RF renvoie 138, un message MSG(D_{R}) contenant la durée d'anticipation D_{R} nécessaire au traitement des messages qui lui sont destinés. Le contrôleur d'interface côté BB réalise alors le cumul des anticipations D_{A}=D_{I}+D_{R}, et fournit, 139, cette valeur à l'applicatif TS. Cette anticipation minimale D_{A} est respectée par l'applicatif TS pour dialoguer avec la RF.

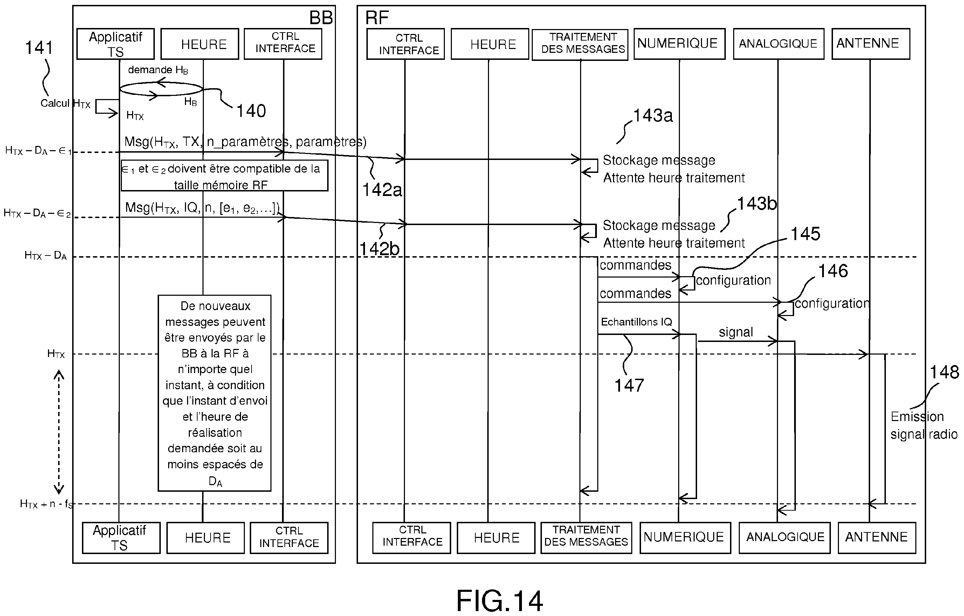

La configuration du système étant réalisée, la BB va solliciter l'émission de paquets d'échantillons IQ, figure 14. L'applicatif TS acquière l'heure courante auprès du module heure. Il détermine ensuite, 141, selon ses besoins propres, l'heure H_{TX} à laquelle il souhaite voir sortir le signal au pied de l'antenne, correspondant au premier échantillon du paquet qu'il a ou qu'il va générer.

Connaissant le délai d'anticipation minimale D_{A} nécessaire au traitement du message, l'applicatif TS envoie deux messages 142a, 142b, avant la date ou instant H_{TX}-D_{A} à la RF. Les temps ε₁ et ε₂ sur le schéma représentent l'anticipation temporelle avant H_{TX}-D_{A} que prend l'applicatif TS pour générer les messages 142a et 142b. Le premier message correspond à l'ordre de passage en émission à partir de l'instant H_{TX}, avec la configuration souhaitée de la RF (par exemple, la puissance d'émission, la fréquence porteuse, etc.), le deuxième message correspond aux échantillons IQ qui sont associés à cette configuration.

Les messages sont acheminés, par les contrôleurs d'interface de la BB vers la RF et sont immédiatement stockés, 143a, 143b, dans la mémoire de la RF. Le module de traitement des messages 35 détermine également immédiatement les temps de stockage temporaires pour chacun des deux messages avant de lancer leurs exécutions. Les temps de stockage peuvent être différents selon le TYPE des messages.

Lorsque les temps de stockage temporaires sont révolus, le module de traitement des messages réalise l'exécution des messages : il réalise les configurations numériques 145 et analogiques 146 de la RF, puis active, 147, le flux des données d'échantillons IQ qui sont alors acheminés 148 jusqu'au pied d'antenne dans le respect absolu du temps réel.

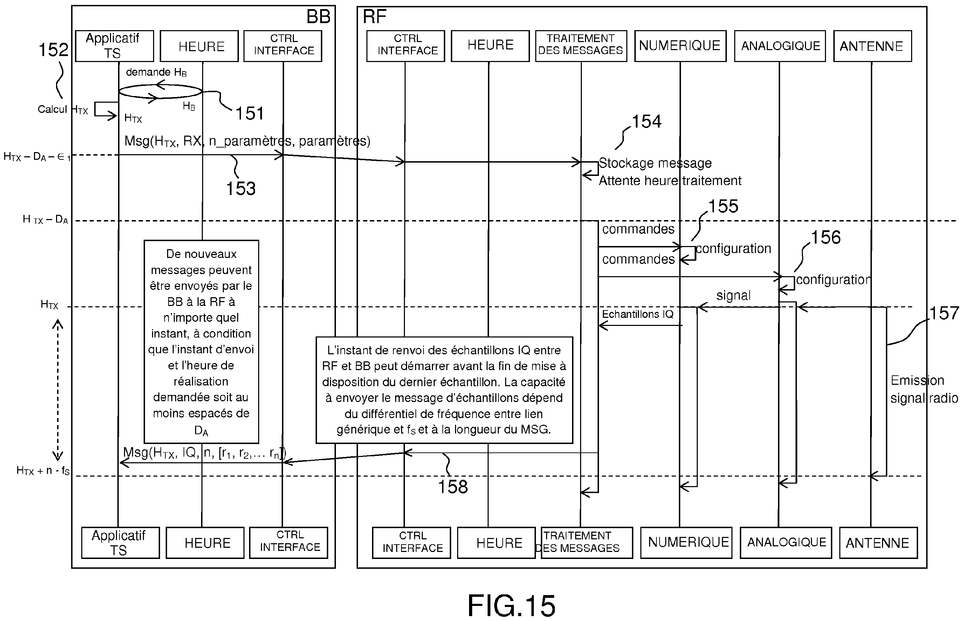

La figure 15 illustre les étapes mises en œuvre pour la réception d'un paquet d'échantillons IQ avec configuration RF associée.

De manière symétrique au cas précédent, la réception d'un paquet d'échantillons IQ est sollicitée par la BB. L'applicatif TS acquière, 151, l'heure courante auprès du module HEURE. Il détermine ensuite, selon ses besoins propres, l'heure H_{RX}, 152, à laquelle il souhaite acquérir le signal au pied d'antenne qui correspondra au premier échantillon du paquet qu'il va recevoir.

Connaissant le délai d'anticipation D_{A} nécessaire au traitement des messages, il doit envoyer, 153, un message MSG(H_{RX}, RX, paramètres) avant la date H_{RX}-D_{A} à la RF. Ce message correspond à l'ordre de prise en compte du premier échantillon Rx à partir de l'instant H_{RX}, avec la configuration souhaitée de la RF (Gain, fréquence porteuse, etc...).

Le message est acheminé par les contrôleurs d'interface de la BB vers la RF et est immédiatement stocké, 154, dans la mémoire de la RF. Le module de traitement des messages détermine immédiatement le temps de stockage temporaire pour ce message avant de lancer son exécution.

Lorsque le temps de stockage temporaire est révolu, le module de traitement des messages réalise l'exécution des messages : il réalise les configurations numériques 155, et analogiques 156 de la RF, puis active 157 le chemin de données depuis le pied d'antenne, jusqu'en sortie du numérique qui fournit les données d'échantillons IQ dans le respect absolu du temps réel.

Un message MSG(H_{RX}, IQ, n, [r₁,..rₙ]) est alors généré, 158, dans la RF, contenant exactement l'instant H_{RX}, correspondant au premier échantillon du paquet, et les échantillons IQ associés. Ce message est alors acheminé à la BB par le contrôleur d'interface de la RF et le contrôleur d'interface de la BB.

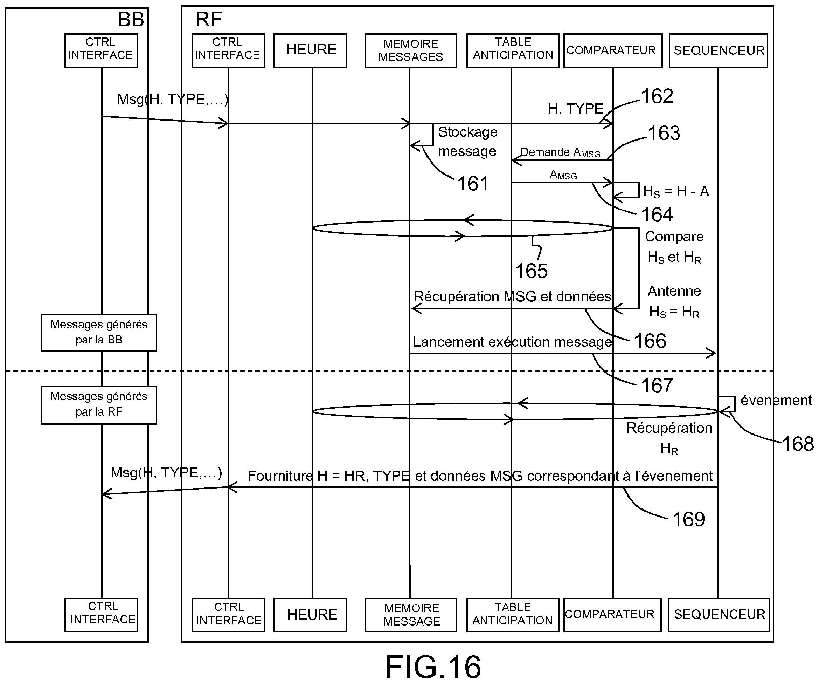

La figure 16 illustre le fonctionnement du traitement des messages.
Le chronogramme de la figure 16 détaille les séquencements internes du module « traitement des messages » des trois diagrammes précédents (figures 13, 14 et 15). Deux cas sont à considérer : les messages générés par la BB, et les messages générés par la RF.

Lorsqu'un message MSG(H, TYPE) est envoyé de la BB vers la RF, ce message arrive sur la RF via le contrôleur d'interface 34. Ce dernier envoie 161 immédiatement la totalité des données du message (Heure, données, type, etc...) vers la mémoire de stockage des messages, et uniquement, 162, l'heure H et le TYPE de message au COMPARATEUR.

Le comparateur consulte, 163, (demande A_{MSG}) la table d'anticipations qui contient les délais de traitement nécessaires à la RF et correspondant à chaque type de message. Il calcule alors, 164, l'instant de réalisation H_{S}, correspondant à l'instant de déclanchement du module de traitement (Séquenceur) qui exécutera le message. Le comparateur compare alors, 165, la date de réalisation H_{S} avec l'heure courante H_{R}, et lorsque l'égalité se produit, les données correspondant au message depuis la mémoire sont récupérées 166 et l'exécution du message démarre 167.

L'émission d'un message depuis la RF vers la BB est conditionnée par l'apparition d'un événement, 168. Dans le cas d'exemple du rapatriement d'échantillons IQ vers la BB, l'événement correspond à l'instant d'acquisition au pied d'antenne, correspondant au premier échantillon IQ. A cet instant précis, le module de traitement des messages ou séquenceur acquière l'heure courante après du module HEURE.

Le séquenceur construit le message en plaçant l'heure de l'événement, le type de message et les échantillons IQ, qu'il envoie, 169, de manière opportuniste le plus rapidement vers la BB. Selon les vitesses relatives du lien générique, de la fréquence d'échantillonnage et de la taille des paquets, il est envisageable que l'instant d'envoi du message se produise avant la fin de la réception du dernier échantillon du paquet.

L'utilisation d'une interface physique générique banalisée permet d'abstraire les spécificités de conception matérielle de part et d'autre de l'interface entre Bande de base (BB) et radiofréquence (RF). Les sous-ensembles bande de base et radiofréquence communiquent par l'intermédiaire d'échanges de messages datés qui leur permettent de s'appréhender de manière logique. Les dates indiquant les instants de réalisation des évènements (configuration, émission ou réception), les sous ensembles BB et RF peuvent fonctionner de manière asynchrone, ce qui permet de décorréler les contraintes temps-réels. L'échange de messages permet, de plus, de s'affranchir de la connaissance précise des capacités supportées par la radiofréquence et des performances associées.

En conséquence, les logiciels mis en œuvre dans la partie bande de base sont indépendants de la partie radio fréquence. Les sous-ensembles ainsi définis sont réutilisables directement avec d'autres modules de conception différente mais respectant le même cadre d'architecture. Avantageusement le procédé n'émet pas de contrainte sur le type (technologie / architecture) de la mémoire 102 à utiliser. Il n'impose pas à l'applicatif TS 30 de générer chroniquement les messages destinés à la RF, ni à la RF de devoir réaliser le tri du contenu de la mémoire 102 contenant les messages.

## Revendications

1. Architecture d'interface entre un premier sous-ensemble numérique bande de base, BB, et au moins un deuxième sous-ensemble radiofréquence, RF, connecté au moyen d'un lien L, l'architecture comportant au moins les éléments suivants :
• au niveau du sous-ensemble numérique BB,
• un module applicatif (30) de traitement de signal, TS, dont le fonctionnement est basé sur l'exploitation d'une heure H_{B} (31), ledit module applicatif, TS, (30) est adapté à générer et/ou recevoir des messages MSG(H, données) comprenant une heure H de réalisation, et des données, les données comprenant des paramètres ou échantillons IQ, associés au fonctionnement du sous-ensemble RF, et fonctionne avec un contrôleur d'interface générique (33), le sous-ensemble BB dispose d'une vue fonctionnelle et temporelle simplifiée du sous-ensemble RF ;
• au niveau du sous-ensemble RF comprenant une partie numérique (38) et une partie analogique (39),
• un contrôleur d'interface (34) en liaison avec un module (35) de traitement des messages MSG(H, données), ledit module (35) de traitement des messages est adapté à fonctionner sur la base d'une heure H_{R} (36), et émettant des signaux de contrôles vers la partie numérique (38) et la partie analogique (39) du sous-ensemble RF, émettant et/ou recevant des messages vers/depuis le sous-ensemble BB,
• une mémoire (102) pour stocker les messages en attente de traitement, une table (101) d'anticipation de messages contenant les valeurs d'acquisition temporelles correspondant à chaque type de message et utilisées par le module traitement message pour réaliser le message, un module (103) adapté à comparer l'heure H de réalisation d'un message à un temps nécessaire à son exécution et à fournir un signal de déclenchement du traitement du message au module de traitement de messages (35) générant des signaux de contrôle vers ladite partie numérique (38) et vers ladite partie analogique (39), et un module (104) de mise à l'heure,
• lesdits contrôleurs d'interface (33), (34) sont adaptés à synchroniser l'heure H_{B} du sous-ensemble numérique BB et l'heure H_{R} du sous-ensemble RF,
• ledit lien L est adapté à véhiculer les messages datés entre le sous-ensemble RF et le sous-ensemble BB.

2. Architecture selon la revendication 1 **caractérisée en ce qu'**elle comporte une chaine de restitution et une chaîne d'acquisition au niveau du sous-ensemble BB ou au niveau du sous-ensemble RF.

3. Architecture selon l'une des revendications 1 à 2 **caractérisée en ce que** le contrôleur d'interface du sous-ensemble BB est adapté à générer des messages ayant le format suivant un champ adresse (71), suivie d'une heure de réalisation (72) d'un message, du type (73) de message, de la taille des données (74) et un champ (75) pour les données.

4. Procédé mis en œuvre dans l'architecture selon l'une des revendications 1 à 3 comportant au moins les étapes suivantes :
• piloter un ou plusieurs sous-ensembles radiofréquence, RF, (2) comprenant au moins un contrôleur d'interface (34), à partir d'un sous-ensemble bande de base, BB, comprenant un contrôleur d'interface (33) et un module applicatif de traitement de signal, TS,
• configurer le/les sous-ensemble(s) RF et déterminer le délai d'anticipation temporelle avec lequel ledit module applicatif TS doit fonctionner, ledit délai étant utilisé par le/les sous-ensemble(s) RF pour exécuter le message,
• synchroniser les heures H_{B}, H_{R} entre le sous-ensemble numérique BB et le/les sous-ensemble(s) radio(s),
• émettre à partir du sous-ensemble BB et vers un sous-ensemble RF, des messages datés MSG(H, données) comprenant une heure H de réalisation souhaitée sur le plan antenne, et des données, paramètres ou échantillons IQ, indiquant au sous-ensemble RF les traitements à effectuer,
• mémoriser (161) le message daté et intégrer (164) le délai d'anticipation nécessaire au traitement de ce message, afin que son exécution produise sur le plan antenne à l'heure H contenue dans le message daté, l'action correspondante à la commande également contenue dans le message daté.

5. Procédé selon la revendication 4 **caractérisé en ce que** lors du démarrage, le procédé comporte au moins les étapes suivantes :
• une première phase pour déterminer le délai de traversée de l'interface entre un sous-ensemble RF et le sous-ensemble BB,
• une deuxième phase de synchronisation de l'heure H_{R} d'un sous-ensemble RF et de l'heure H_{B} du sous-ensemble BB,
• une troisième phase où le sous-ensemble BB récupère le délai d'anticipation minimal utilisé par l'applicatif TS pour transmettre les messages datés du sous-ensemble BB vers le sous-ensemble RF,
• une quatrième phase dans laquelle on déduit à partir de la latence existant entre le sous-ensemble BB et vers le sous-ensemble RF, le temps minimum d'anticipation unique qui sera utilisé par le sous-ensemble BB pour piloter le sous-ensemble RF.

6. Procédé selon la revendication 5 **caractérisé en ce qu'**il comporte au moins les étapes suivantes :
• une première phase où l'on réalise une boucle d'émission/réception en exécutant les étapes suivantes,
• à l'instant t=H, (130), le contrôleur d'interface BB envoie un message MSG(demande (τ)) au contrôleur d'interface RF afin de récupérer le temps nécessaire côté RF pour fabriquer, (131), un message de retour MSG(τ) qui contient le délai de transit D_{I} pour répondre, τ est le délai de fabrication du message,
• on mesure les instants de départ t et d'arrivée t' = H+2D_{I}+ τ de la boucle au niveau du sous-ensemble BB, afin de déterminer le délai de transit D_{I},
• une deuxième phase où le sous-ensemble BB transmet à l'instant H_{B}, (133), un message MSG(mise à l'heure [H_{B}+D_{I}] à destination du sous-ensemble RF contenant l'heure H_{B} majorée du délai de transit D_{I}, ou l'heure H_{R} majorée du délai de transit D_{I} durée nécessaire à l'acheminement du message jusqu'au module d'heure côté sous-ensemble radio,
• une troisième phase où le module applicatif TS envoie, (136), par un message MSG(Config RF), l'ensemble des configurations et/ou informations de configuration nécessaires à son fonctionnement, notamment la configuration numérique (137a) et la configuration analogique (137b),
• en retour, le sous-ensemble radio renvoie (138), message MSG(D_{R}), la durée d'anticipation D_{R} nécessaire au traitement des messages,
• le contrôleur d'interface côté BB réalise alors le cumul des durées d'anticipations D_{A}=D_{I}+D_{R}, et fournit, (139), cette valeur d'anticipation minimale D_{A} à l'applicatif TS pour dialoguer avec le sous-ensemble RF.

7. Procédé selon la revendication 6 **caractérisé en ce qu'**en émission, un message d'échantillons IQ créé par le sous-ensemble BB, comprend la date (72) indiquant l'instant de sortie sur le plan antenne (10) du premier échantillon, déduite de l'heure temps réel ***H_{B}*** du sous-ensemble BB, les commandes datées (502, 503) étant exécutées à la date imposée (72) quelque soit l'ordre de génération desdites commandes.

8. Procédé selon la revendication 6 **caractérisé en ce qu'**en réception, un message d'échantillons IQ créé par le sous-ensemble RF, comprend la date (72) indiquant l'instant de prise en compte du premier échantillon sur le plan antenne (10), et déduite de l'heure temps réel ***H_{R}*** du sous-ensemble radio.

9. Procédé selon la revendication 6 **caractérisé en ce qu'**un message de configuration du sous-ensemble RF créé par le sous-ensemble BB comprend la date (72) indiquant l'instant auquel le sous-ensemble radio RF doit être configuré pour les échantillons entrants / sortants, et la date est déduite de ***H_{B}*** du sous-ensemble BB.

10. Procédé selon la revendication 6 **caractérisé en ce qu'**un message de contrôle créé par le sous-ensemble RF, comprend la date indiquant l'instant de relevé des mesures, et la date est déduite de l'heure temps réel ***H_{R}*** du sous-ensemble RF.

11. Utilisation du procédé selon l'une des revendications 4 à 10 :
• à un système intégrant le sous-ensemble BB et le sous-ensemble RF au sein d'un même boitier,
ou
• à un système où le sous-ensemble BB et le sous-ensemble RF sont logés dans deux boitiers physiquement séparés et distants.

12. Utilisation du procédé selon l'une des revendications 4 à 11 à des systèmes destinés aux applications suivantes : système radar, système de transmission tactique, radio portable et radio véhicule, aéronautique et naval, système de goniométrie, système de capteurs / réflecteurs, système de brouillage, système de transmission d'infrastructure, équipement d'instrumentation, banc de tests, système de navigation, système de surveillance du spectre.

## Patentansprüche

1. Schnittstellenarchitektur zwischen einer ersten digitalen Basisband-(BB)-Unterbaugruppe und wenigstens einer zweiten Radiofrequenz-(RF)-Unterbaugruppe, die mittels einer Verbindung L verbunden sind, wobei die Architektur wenigstens die folgenden Elemente beinhaltet:
• an der digitalen BB-Unterbaugruppe:
• ein Signalverarbeitungs-(TS)-Anwendungsmodul (30), dessen Funktion auf der Nutzung einer Zeit H_{B} (31) basiert, wobei das Anwendungsmodul TS (30) zum Erzeugen und/oder Empfangen von Nachrichten MSG(H, Daten), umfassend eine Realisierungszeit H, und von Daten ausgelegt ist, wobei die Daten mit der Funktion der RF-Unterbaugruppe assoziierte Parameter oder Samples IQ umfassen, und mit einem generischen Schnittstellencontroller (33) funktioniert, wobei die BB-Unterbaugruppe über eine vereinfachte funktionelle und zeitliche Ansicht der RF-Unterbaugruppe verfügt;
• an der RF-Unterbaugruppe, die einen digitalen Teil (38) und einen analogen Teil (39) umfasst:
• einen Schnittstellencontroller (34) in Verbindung mit einem Nachrichtenverarbeitungsmodul (35) MSG(H, Daten), wobei das Nachrichtenverarbeitungsmodul (35) so ausgelegt ist, dass es auf der Basis einer Zeit H_{R} (36) funktioniert und Steuersignale zu dem digitalen Teil (38) und dem analogen Teil (39) der RF-Unterbaugruppe sendet und Nachrichten zu/von der BB-Unterbaugruppe sendet und/oder empfängt,
• einen Speicher (102) zum Speichern der auf die Verarbeitung wartenden Nachrichten, eine Tabelle (101) zur Antizipation von Nachrichten, die die zeitlichen Erfassungswerte enthalten, die jedem Nachrichtentyp entsprechen und benutzt werden durch das Nachrichtenverarbeitungsmodul zum Realisieren der Nachricht, wobei ein Modul (103) zum Vergleichen der Zeit H der Realisierung einer Nachricht zu einer für ihre Ausführung notwendigen Zeit und zum Liefern eines Signals zum Auslösen der Verarbeitung der Nachricht zu dem Nachrichtenverarbeitungsmodul (35) ausgelegt ist, das Steuersignale zum digitalen Teil (38) und zum analogen Teil (39) erzeugt, und ein Aktualisierungsmodul (104),
• wobei die Schnittstellencontroller (33), (34) zum Synchronisieren der Zeit H_{B} der digitalen BB-Unterbaugruppe und der Zeit H_{R} der RF-Unterbaugruppe ausgelegt sind,
• die Verbindung L zum Befördern der datierten Nachrichten zwischen der RF-Unterbaugruppe und der BB-Unterbaugruppe ausgelegt sind.

2. Architektur nach Anspruch 1, **dadurch gekennzeichnet, dass** sie eine Restitutionskette und eine Erfassungskette an der BB-Unterbaugruppe oder an der RF-Unterbaugruppe umfasst.

3. Architektur nach einem der Ansprüche 1 bis 2, **dadurch gekennzeichnet, dass** der Schnittstellencontroller der BB-Unterbaugruppe zum Erzeugen von Nachrichten mit dem folgenden Format ausgelegt ist: ein Adressfeld (71), gefolgt von einer Zeit (72) des Realisierens einer Nachricht, ein Typ (73) der Nachricht, die Größe der Daten (74) und ein Feld (75) für die Daten.

4. Verfahren, durchgeführt in der Architektur nach einem der Ansprüche 1 bis 3, das wenigstens die folgenden Schritte beinhaltet:
• Steuern von einer oder mehreren Radiofrequenz-(RF)-Unterbaugruppen (2), umfassend wenigstens einen Schnittstellencontroller (34), auf der Basis einer Basisband-(BB)-Unterbaugruppe, umfassend einen Schnittstellencontroller (33) und ein Signalverarbeitungs-(TS)-Anwendungsmodul,
• Konfigurieren der ein oder mehreren RF-Baugruppen und Bestimmen der zeitlichen Antizipationsperiode, mit der das TS-Anwendungsmodul funktionieren muss, wobei die Periode von den ein oder mehreren RF-Unterbaugruppen zum Ausführen der Nachricht benutzt wird,
• Synchronisieren der Zeiten H_{B}, H_{R} zwischen der digitalen BB-Unterbaugruppe und den ein oder mehreren Radiounterbaugruppen,
• Senden, von der BB-Unterbaugruppe zu einer RF-Unterbaugruppe, von datierten Nachrichten MSG(H, Daten), umfassend eine Zeit H der gewünschten Realisierung auf der Antennenebene, und von Daten, Parametern oder Sampeln IQ, die der RF-Unterbaugruppe die durchzuführenden Verarbeitungen anzeigen,
• Speichern (161) der datierten Nachricht und Integrieren (164) der zum Verarbeiten dieser Nachricht notwendigen Antizipationsperiode, damit ihre Ausführung auf der Antennenebene zum Zeitpunkt H, der in der datierten Nachricht enthalten ist, die Aktion, die dem ebenfalls in der datierten Nachricht enthaltenen Befehl entspricht, veranlasst.

5. Verfahren nach Anspruch 4, **dadurch gekennzeichnet, dass** beim Start das Verfahren wenigstens die folgenden Schritte beinhaltet:
• eine erste Phase zum Bestimmen der Dauer des Überquerens der Schnittstelle zwischen einer RF-Unterbaugruppe und der BB-Unterbaugruppe,
• eine zweite Phase des Synchronisierens der Zeit H_{R} einer RF-Unterbaugruppe und der Zeit H_{B} der BB-Unterbaugruppe,
• eine dritte Phase, in der die BB-Unterbaugruppe die minimale Antizipationsperiode wiederherstellt, die von der TS-Anwendung zum Übertragen der datierten Nachrichten von der BB-Unterbaugruppe zur RF-Unterbaugruppe benutzt wird,
• eine vierte Phase, in der auf der Basis der Latenz zwischen der BB-Unterbaugruppe und der RF-Unterbaugruppe die eindeutige Mindestantizipationszeit abgeleitet wird, die von der BB-Unterbaugruppe zum Steuern der RF-Unterbaugruppe benutzt wird.

6. Verfahren nach Anspruch 5, **dadurch gekennzeichnet, dass** es wenigstens die folgenden Schritte beinhaltet:
• eine erste Phase, in der eine Sende-/Empfangsschleife unter Ausführung der folgenden Schritte realisiert wird:
• zur Instanz t=H (130) sendet der BB-Schnittstellencontroller eine Nachricht MSG(Befehl (τ)) zum Schnittstellencontroller RF, um die auf der RF-Seite benötigte Zeit zum Herstellen (131) einer Antwortnachricht MSG(τ) zurückzugewinnen, die die Übergangsdauer D_{I} zum Antworten enthält, wobei τ die Dauer der Herstellung der Nachricht ist,
• Messen der Instanzen von Ausgang t und Ankunft t' = H+2D_{I}+ τ der Schleife an der BB-Unterbaugruppe, um die Übergangsdauer D_{I} zu bestimmen,
• eine zweite Phase, in der die BB-Unterbaugruppe zur InstanzH_{B} (133) eine Nachricht MSG (aktualisiert [H_{B}+D_{I}]) zur RF-Unterbaugruppe sendet, enthaltend Zeit H_{B} verlängert um die Übergangsdauer D_{I}, oder Zeitpunkt H_{R}, verlängert um die Übergangszeit D_{I}, die benötigt wird, um die Nachricht zum Zeitmodul zur Radiosubbaugruppe zu leiten,
• eine dritte Phase, in der das TS-Anwendungsmodul (136), durch eine Nachricht MSG(Config RF), alle Konfigurationen und/oder Konfigurationsinformationen sendet, die für ihre Funktion notwendig sind, insbesondere die digitale Konfiguration (137a) und die analoge Konfiguration (137b),
• als Antwort sendet die Unterbaugruppe (138), Nachricht MSG(D_{R}), die für die Verarbeitung der Nachricht notwendige Antizipationsdauer D_{R},
• der Schnittstellencontroller auf der BB-Seite realisiert dann die Kumulation von Antizipationsdauern D_{A}=D_{I}+D_{R} und liefert (139) diesen minimalen Antizipationswert D_{A} an die TS-Anwendung für einen Dialog mit der RF-Unterbaugruppe.

7. Verfahren nach Anspruch 6, **dadurch gekennzeichnet, dass** beim Senden eine Sample-Nachricht IQ, erzeugt von der BB-Unterbaugruppe, den Termin (72) umfasst, der den Zeitpunkt des Ausgangs auf der Antennenebene (10) des ersten Sample anzeigt, abgeleitet von der Echtzeit ***H_{B}*** der BB-Unterbaugruppe, wobei die datierten Befehle (502, 503) zum auferlegten Termin (72) ausgeführt werden, unabhängig von der Reihenfolge der Erzeugung der Befehle.

8. Verfahren nach Anspruch 6, **dadurch gekennzeichnet, dass** beim Empfangen eine von der RF-Unterbaugruppe erzeugte Sample-Nachricht IQ den Termin (72) umfasst, der den Moment der Berücksichtigung des ersten Sample auf der Antennenebene (10) anzeigt und der von der Echtzeit ***H_{R}*** der Radio-Unterbaugruppe abgeleitet wurde.

9. Verfahren nach Anspruch 6, **dadurch gekennzeichnet, dass** eine von der BB-Unterbaugruppe erzeugte Konfigurationsnachricht der RF-Unterbaugruppe den Termin (72) umfasst, der den Zeitpunkt anzeigt, zu dem die RF-Radiounterbaugruppe für die Eingänge/Ausgänge der Samples konfiguriert werden muss, und der Termin von ***H_{B}*** der BB-Unterbaugruppe abgeleitet wird.

10. Verfahren nach Anspruch 6, **dadurch gekennzeichnet, dass** eine von der RF-Unterbaugruppe erzeugte Steuernachricht den Termin umfasst, der den Zeitpunkt des Treffens von Maßnahmen umfasst, und der Termin von der Echtzeit ***H_{R}*** der RF-Unterbaugruppe abgeleitet wird.

11. Anwendung des Verfahrens nach einem der Ansprüche 4 bis 10:
• in einem System, das die BB-Unterbaugruppe und die RF-Unterbaugruppe im Inneren eines einzigen Gehäuses integriert, oder
• in einem System, in dem die BB-Unterbaugruppe und die RF-Unterbaugruppe in zwei physisch getrennten und distanten Gehäusen untergebracht sind.

12. Anwendung des Verfahrens nach einem der Ansprüche 4 bis 11 auf Systeme, die für die folgenden Anwendungen bestimmt sind: Radarsystem, taktisches Übertragungssystem, tragbar und Kfz-, Flugzeug- und Schiffsgestützt, Goniometriesystem, System von Sensoren/Reflektoren, Störungsvorrichtung, Infrastrukturübertragungssystem, Instrumentationsgeräte, Prüfständer, Navigationssystem, Spektrumüberwachungssystem.

## Claims

1. An interface architecture between a first digital baseband subassembly, BB, and at least one second radio subassembly, RF, connected by means of a link L, which architecture comprising at least the following elements:
• at the digital BB subassembly,
• a signal processing, TS, application module (30), the operation of which is based on the operation of a time H_{B} (31), said application module, TS, (30) is adapted to generate and/or receive messages MSG(H, data) comprising a time H of implementation and data, the data comprising parameters or IQ samples, which are associated with the operation of the RF subassembly, and works with a generic interface controller (33), the BB subassembly has a simplified functional and temporal view of the RF subassembly,
• at the RF subassembly comprising a digital portion (38) and an analog portion (39),
• an interface controller (34) linked to a module (35) for processing the messages MSG(H, data), said module (35) for processing the messages is adapted to work on the basis of a time H_{R} (36), and transmitting control signals to the digital portion (38) and the analog portion (39) of the RF subassembly, transmitting and/or receiving messages to/from BB subassembly,
• a memory (102) for storing the messages awaiting processing, a table (101) for anticipating messages containing the temporal acquisition values corresponding to each type of message and that are used by the message processing module to implement the message, a module (103) adapted to compare a time H of implementation of a message with a time that is necessary for execution thereof and to provide a signal for triggering the processing of the message for the message processing module (35) generating control signals to said digital portion (38) and to said analog portion (39), and a time-setting module (104),
• said interface controllers (33), (34) are adapted to synchronize the time H_{B} of the digital BB subassembly and the time H_{R} of the RF subassembly,
• said link L is adapted for conveying the dated messages between the RF subassembly and the BB subassembly.

2. The architecture as claimed in claim 1, **characterized in that** it has a restoration chain and an acquisition chain at the BB subassembly or at the RF subassembly.

3. The architecture as claimed in either of claims 1 and 2, **characterized in that** the interface controller of the BB subassembly is adapted to generate messages having the following format: a field address (71), followed by a time of implementation (72) of a message, the type (73) of message, the size of the data (74) and a field (75) for the data.

4. A method implemented in the architecture as claimed in one of claims 1 to 3, having at least the following steps:
• controlling one or more radio subassemblies, RF, (2) comprising at least one interface controller (34), from a baseband subassembly, BB, comprising an interface controller (33) and an signal processing application module, TS,
• configuring the RF submodule(s) and determining the temporal anticipation time with which the application module TS has to work, this period of time being used by the RF submodule(s) for implementing the message,
• synchronizing the times H_{B}, H_{R} between the digital BB subassembly and the radio subassembly(ies),
• transmitting, from the BB subassembly and to a RF subassembly, dated messages MSG(H, data) having a time H of desired implementation on the antenna plane and data, parameters or IQ samples indicating to the RF submodule the processing operations to be performed,
• storing (161) the dated message and integrating (164) the required anticipation time necessary for the processing of this message, so that its execution produces on the antenna plane at the time H contained in the dated message, the action corresponding to the command, which is also contained in the dated message.

5. The method as claimed in claim 4, **characterized in that** on startup, the method comprises at least the following steps:
• a first phase for determining the passage time of the interface between a RF subassembly and the BB subassembly,
• a second phase of synchronization of the time H_{R} of a RF subassembly and the time H_{B} of the BB subassembly,
• a third phase, in which the BB subassembly retrieves the minimum anticipation time used by the application TS for transmitting the dated messages from the BB subassembly to the RF subassembly,
• a fourth phase, in which the latency between the BB subassembly and the RF subassembly is used to deduce the single minimum anticipation time that will be used by the BB subassembly for controlling the RF subassembly.

6. The method as claimed in claim 5, **characterized in that** it comprises at least the following steps:
• a first phase, in which a transmission/reception loop is implemented by executing the following steps,
• at the instant t=H, (130), the interface controller BB sends a message MSG(request (τ)) to the interface controller RF in order to retrieve the time required by the RF to produce, (131), a return message MSG(τ) that contains the transit time D₁ for replying, τ is the time for producing the message,
• the departure t and arrival t' = H+2D₁+ τ instants of the loop are measured at the BB subassembly in order to determine the transit time D₁,
• a second phase, in which the BB subassembly transmits, at the instant H_{B}, (133), a message MSG(time setting [H_{B}+D₁]) to the RF subassembly containing the time H_{B} increased by the transit time D₁, or the time H_{R} increased by the transit time D₁, the period necessary for routing the message to the time module at the radio subassembly,
• a third phase, in which the application TS sends, (136), by means of a message MSG(Config RF), all of the configurations and/or configuration information that is/are necessary for operation thereof, notably the digital configuration (137a) and the analog configuration (137b),
• in return, the radio subassembly returns (138), message MSG(D_{R}), the anticipation period D_{R} necessary for processing the messages,
• the BB interface controller then accumulates the anticipation periods D_{A}=D₁+D_{R}, and provides, (139), this minimum anticipation value D_{A} to the application TS in order to converse with the RF subassembly.

7. The method as claimed in claim 6, **characterized in that**, at transmission, a message of IQ samples that is created by the BB subassembly comprises the date (72) indicating the instant of output of the first sample on the antenna plane (10), said output being deduced from the real-time time ***H_{B}*** of the BB subassembly, the dated commands (502, 503) being executed on the required date (72) whatever the order of generation of said commands.

8. The method as claimed in claim 6, **characterized in that**, at reception, a message of IQ samples that is created by the RF subassembly comprises the date (72) indicating the instant of consideration of the first sample on the antenna plane (10), said date being deduced from the real-time time ***H_{R}*** of the radio subassembly.

9. The method as claimed in claim 6, **characterized in that** a message for configuring the RF subassembly, which message is created by the BB subassembly, comprises the date (72) indicating the instant at which the RF subassembly needs to be configured for the incoming/outgoing samples, and the date is deduced from ***H_{B}*** of the BB subassembly.

10. The method as claimed in claim 6, **characterized in that** a control message created by the RF subassembly comprises the date indicating the instant at which the measurements are taken, and the date is deduced from the real-time time ***H_{R}*** of the RF subassembly.

11. The use of the method as claimed in one of claims 4 to 10:
• on a system integrating the BB subassembly and the RF subassembly within one and the same housing,
or
• on a system in which the BB subassembly and the RF subassembly are accommodated in two housings that are physically separate and remote.

12. The use of the method as claimed in one of claims 4 to 11 on systems intended for the following applications: radar system, tactical transmission system (portable and vehicle radio, aeronautical and naval), goniometry system, sensor/reflector system, jamming system, infrastructure transmission system, instrumentation equipment, test bench, navigation system, spectrum monitoring system.
